# EUROPÄISCHE PATENTANMELDUNG

(11) **EP 3 629 469 A1**
(43) Veröffentlichungstag der Anmeldung: **01.04.2020**
(21) Anmeldenummer: 18197640.8
(22) Anmeldetag: 28.09.2018
(51) Int. Cl.: H02P 3/18, B65G 23/24, B65G 43/02, H02P 29/00, H02P 29/024, H02P 29/028, H02J 9/00, H02P 6/24

(54) **GURTFÖRDEREINRICHTUNG SOWIE VERFAHREN ZUM ANHALTEN EINES GURTES EINER GURTFÖRDEREINRICHTUNG**

(71) Anmelder: Siemens Aktiengesellschaft, 80333 München (DE)
(72) Erfinder: Becker, Norbert, 91341 Röttenbach (DE); Hellmuth, Torsten, 91058 Erlangen (DE)

(57) **Zusammenfassung**

Die Erfindung betrifft eine Gurtfördereinrichtung (1) sowie ein Verfahren zum kontrollierten Anhalten einer Gurtfördereinrichtung (1). Insbesondere für direkt angetriebene Gurtfördereinrichtungen (1) kann ein Ereignis (E), wie ein Stromausfall, zu einem schnellen Stillstand einer Gurtantriebsrolle (5) führen. Ein schneller Stillstand der Gurtantriebsrolle (5) führt lokal zu einer Abnahme der Gurtspannung des Gurtes (3). Durch die lokale Abnahme der Gurtspannung kann eine Stauchung des Gurtes (3) oder gar ein Falten des Gurtes (3) den Gurt (3) beschädigen. Um eine Beschädigung des Gurtes (3) zu verhindern, schlägt die Erfindung vor, bei dem Ereignis (E) den Motor (7) langsam zum Stillstand abzubremsen. Die elektrische Energie für das langsame Abbremsen wird vorzugsweise einem Energiespeicher (13) entnommen, wobei der Energiespeicher (13) einer Stromversorgung (9) für den Motor (7) zugeordnet ist. Vorzugsweise erfolgt das Abbremsen gemäß einer Kennlinie (K), wobei die Kennlinie (K) die Drehzahl (w) des Motors (7) als Funktion der Zeit (t) angibt.

## Beschreibung

Die Erfindung betrifft eine Gurtfördereinrichtung sowie ein Verfahren zum Anhalten eines Gurtes einer Gurtfördereinrichtung.

Gurtfördereinrichtungen dienen zum Transport von Schüttgut über lange Distanzen, insbesondere mehrerer Kilometer. Gurtfördereinrichtungen umfassen in der Regel einen Gurt, der von zumindest einer Gurtantriebsrolle angetrieben ist. Zum Antrieb der Gurtantriebsrolle dient ein Motor. In der Regel ist zwischen dem Motor und der Gurtantriebsrolle ein Getriebe zur Veränderung der Drehzahl und des Drehmoments positioniert. Seit einiger Zeit sind auch direkt-angetriebene Gurtfördereinrichtungen bekannt, die kein Getriebe zwischen dem Motor und der Gurtantriebsrolle aufweisen.

Bei einem Anhalten des Gurtes der Gurtfördereinrichtung auf Grund eines unvorhergesehenen Ereignisses führt eine hohe Trägheit des Schüttgutes zu einer nachteilhaften mechanischen Belastung des Gurtes.

Insbesondere bei einem Stromausfall oder einem ähnlichen Ereignis, welches zu einem Ausfall des Antriebs führt, drückt das sich bewegende Schüttgut aufgrund seiner Trägheit den Gurt weiter, während der Motor und die damit verbundene Gurtantriebsrolle bereits zum Stillstand gekommen sind.

Durch das die Trägheit des bewegten Massengutes und der fehlenden Drehung der Gurtantriebsrolle nimmt lokal die Gurtspannung ab. Dies führt zu einer nachteilhaften Stauchung des Gurtes bis hin zu einer Faltung des Gurtes.

Zur Verminderung der Belastung des Gurtes und zum Verhindern des Faltens des Gurtes erfolgt derzeit eine erhöhte Spannung des Gurtes. Eine erhöhte Spannung des Gurtes vermindert zwar die Gefahr einer Faltung des Gurtes, führt jedoch zu einer erhöhten Grundbelastung des Gurtes.

Deshalb ist es Aufgabe der Erfindung, die Belastung des Gurtes bei einem Stromausfall zu reduzieren.

Diese Aufgabe wird durch eine Gurtfördereinrichtung nach Anspruch 1 gelöst. Darüber hinaus wird diese Aufgabe durch ein Verfahren zum Anhalten einer Gurtantriebsrolle gemäß Anspruch 8 gelöst.

Vorteilhafte Ausgestaltungen und Weiterentwicklungen der Erfindung sind Gegenstand der abhängigen Ansprüche.

Der Erfindung liegt die Erkenntnis zu Grunde, dass insbesondere bei einer direktangetriebenen Gurtfördereinrichtung, die Trägheit von Schüttgut auf dem Gurt bei einem Stromausfall den Gurt durch eine bereichsweise Stauchung belastet. Insbesondere bei konventionell angetriebenen Gurtfördereinrichtungen erfolgt bei einem Stromausfall ein langsames Austrudeln des Antriebs und der Gurtantriebsrolle. Das langsame Austrudeln des Antriebs erfolgt aufgrund des hohen Trägheitsmoments des Antriebs durch das Getriebe. Das Austrudeln des Antriebs ohne ein Getriebe erfolgt deutlich schneller, da das Trägheitsmoment des Antriebs geringer ist.

Um einen Ausgleich des Trägheitsmoments zu erreichen, wird die Drehbewegung des Motors noch für eine Stopp-Zeit aufrecht erhalten. Während der Stopp-Zeit erfolgt die Bereitstellung der elektrischen Energie für den Motor aus einem Energiespeicher. Vorzugsweise ist der Energiespeicher als Zwischenkreis-Energiespeicher, insbesondere als Zwischenkreiskondensator oder als wiederaufladbare Batterie, ausgebildet.

Vorteilhaft erfolgt ein Anhalten des Motors und damit der Gurtantriebsrolle auf Grundlage einer Kennlinie, wobei die Kennlinie Sollwerte für die Drehzahl des Motors als Funktion der Zeit bereitstellt.

Vorteilhaft wird kinetische Energie, welche beim Anhalten des Motors frei wird, durch einen Energiespeicher bereitgestellt. Der Energiespeicher wird vorzugsweise während des Betriebes der Gurtfördereinrichtung aufgeladen. Vorteilhaft dient demnach die Regelung der Drehzahl in Verbindung mit dem Energiespeicher zur langsamen Reduktion der Drehzahl des Motors.

Demnach dient die Regelung zum Ausgleich der Reibungsverluste, so dass der Motor seine Drehzahl innerhalb der vorgegeben Stopp-Zeit zum Stillstand hin reduziert.

Vorzugsweise findet als Energiespeicher ein Schwungrad Anwendung, welches mit einem Elektromotor gekoppelt ist. Vorteilhaft kann auch ein entsprechend der Energieaufnahme ausgelegter Elektromotor ohne zusätzliches Schwungrad als Energiespeicher dienen. Der Elektromotor ist vorzugsweise über einen Frequenzumrichter mit dem Zwischenkreis der Stromversorgung des Motors verbunden, wobei der Motor zum Antrieb der Gurtfördereinrichtung ausgebildet ist.

Die Gurtfördereinrichtung ist insbesondere eine direkt angetriebene Gurtfördereinrichtung. Die Gurtfördereinrichtung weist zumindest eine Gurtantriebsrolle und einen Antrieb auf, wobei der Antrieb einen Motor umfasst, wobei dem Motor ein Energiespeicher zugeordnet ist, wobei der Motor zum Antrieb der Gurtantriebsrolle vorgesehen ist, wobei die Gurtfördereinrichtung dazu ausgebildet ist, nach einem Ereignis, beispielhaft einem Stromausfall, elektrische Energie aus dem Energiespeicher bereitzustellen, um die Drehzahl des Motors innerhalb einer Stopp-Zeit zum Stillstand hin zu verzögern.

Eine direkt angetriebene Gurtfördereinrichtung weist in der Regel kein Getriebe zwischen dem Motor und der Gurtantriebsrolle auf. Der Motor ist vorzugsweise ein Synchronmotor. Vorzugsweise weist der Motor Permanentmagnete auf. Alternativ kann der Motor auch fremderregt, das heißt mit stromdurchflossenen Spulen, ausgebildet sein.

Der Motor wird vorteilhaft während des Betriebes der Gurtfördereinrichtung von einer Stromversorgung mit elektrischer Energie versorgt. Die Stromversorgung kann als Frequenzumrichter mit einem Zwischenkreis ausgeführt sein.

Bevorzugt ist der Energiespeicher der Stromversorgung zugeordnet. Der Energiespeicher ist vorzugsweise in den Zwischenkreis des Frequenzumrichters integriert. Vorzugsweise ist der Energiespeicher als Kondensatoren-Einheit, als aufladbare Batterie oder als Schwungrad mit Motor ausgebildet.

Die Stopp-Zeit hängt
- von der Ausrichtung der Gurtfördereinrichtung;
- von einer Vorspannung des Gurtes;
- von der Beladung der Gurtfördereinrichtung;
- von den Reibungsverlusten der Gurtfördereinrichtung und/oder
- von dem Drehmoment der Gurtantriebsrolle ab.

Vorzugsweise wird eine geeignete Stopp-Zeit durch eine Simulation des Gurtförderers ermittelt.

Ein Ereigniss kann ein Stromausfall oder ein Defekt in der Stromversorgung des Motors sein.

Bei Eintreten des Ereignisses wird dem Motor vorteilhaft elektrische Energie aus dem Zwischenkreis des Frequenzumrichters bereitgestellt. Mit Hilfe der elektrischen Energie kann der Motor zumindest noch in der Stopp-Zeit betrieben werden.

Vorzugsweise ist dem Motor eine Regeleinrichtung für die Drehzahl zugeordnet. Bei einem Ereignis dient die Regeleinrichtung zur Zuführung der elektrischen Energie zum Motor dergestalt, dass der Motor anhand einer Kennlinie verzögert wird.

Vorzugsweise ist eine solche Regeleinrichtung derart ausgebildet, dass die Stopp-Zeit gemäß der elektrischen Energie, die im Energiespeicher gespeichert ist, variiert werden kann.

Durch die Erfindung kann eine Belastung des Gurtes durch ein rasches Anhalten der Gurtantriebsrolle nach einem unvorhergesehenen Ereignis vermindert werden. Insbesondere eine stark unterschiedliche Gurtspannung in verschiedenen Bereichen des Gurtes, und daraus resultierend gegebenenfalls ein Falten des Gurtes, kann durch die Erfindung wirksam verhindert werden.

Bei einer vorteilhaften Ausgestaltung der Erfindung erfolgt das Verzögern des Motors anhand einer Kennlinie, wobei die Kennlinie den Verlauf eines Soll-Wertes der Drehzahl des Motors als Funktion der Zeit vorgibt.

Alternativ oder zusätzlich können weitere Kennlinien für unterschiedliche Beladungszustände der Gurtfördereinrichtung bestimmt und hinterlegt werden.

Die Kennlinie ist vorzugsweise dem Motor, einer Stromversorgung oder einer Drehzahlregelung für den Motor zugeordnet. Vorzugsweise ist die Kennlinie durch eine Versuchsreihe ermittelbar.

Ein vorteilhaftes Verfahren zur Ermittlung der Kennlinie kann wie folgt aussehen:
- Bestimmung der Gurtspannung im Stillstand und während des Betriebes. Vorzugsweise kann die eine maximale Gurtspannung beim Beschleunigen von Schüttgut bestimmt werden, wenn der Gurt der Gurtfördereinrichtung nur bereichsweise mit Schüttgut beaufschlagt ist;
- Optional kann auch eine maximale Abweichung der Gurtspannung in Bezug zur Position der Gurtfördereinrichtung bestimmt werden;
- Berechnung der minimalen Stopp-Zeit, um bei einem bereichsweise beladenen Gurt die Differenz von Gurtspannungen an unterschiedlichen Positionen unter einer maximal zulässigen Differenz zu halten.

Durch die Kennlinie kann für eine vorgegebene Beladung des Gurtes sichergestellt werden, dass kein Falten des Gurtes erfolgt. Durch die Verzögerung der Drehzahl des Motors anhand der Kennlinie kann die Belastung des Gurtes auf ein Minimum reduziert werden.

Bei einer weiteren vorteilhaften Ausgestaltung der Erfindung gibt die Kennlinie eine lineare Abnahme der Drehzahl vor.

Vorzugsweise erfolgt die Verzögerung der Drehzahl des Motors linear. Durch eine lineare Verzögerung der Drehzahl des Motors wird der Gurt besonders geschont.

Bei einer weiteren vorteilhaften Ausgestaltung der Erfindung dauert die Stopp-Zeit zwischen 10 und 150 Sekunden, insbesondere zwischen 30 und 90 Sekunden.

Die Stopp-Zeit ist vorzugsweise die Zeitdauer, welche der Motor oder die Gurtantriebsrolle benötigt, um ausgehend von der Ausgangsdrehzahl zum Stillstand zu gelangen.

Vorzugsweise wird eine Mehrzahl von Stopp-Zeiten für unterschiedliche Beladungszustände der Gurtfördereinrichtung ermittelt und/oder hinterlegt. Je nach Beladungszustand kann die Regeleinrichtung eine geeignete Stopp-Zeit auswählen.

Die Stopp-Zeit wird vorzugsweise in Abhängigkeit von der Beladung des Gurtes mit Schüttgut und/oder einer Vorspannung des Gurtes festgelegt.

In der Regel gilt, je länger die Stopp-Zeit ist, desto schonender ist ein Halten für den Gurt. Demgegenüber ist für eine lange Stopp-Zeit ein größerer Energiespeicher vorteilhaft. Demnach ist eine experimentelle Ermittlung der Stopp-Zeit vorteilhaft, um unterschiedliche Beladungszustände des Gurtes bzw. der Gurtfördereinrichtung angemessen zu berücksichtigen.

Bei einer weiteren vorteilhaften Ausgestaltung der Erfindung weist die Gurtfördereinrichtung eine Regeleinrichtung für die Drehzahl des Motors auf, wobei die Regelung anhand von Sollwerten, insbesondere der Kennlinie, die Drehzahl des Motors regelt.

Die Regeleinrichtung ist vorzugsweise als PID-Regelung ausgebildet. Die Regeleinrichtung dient vorzugsweise zur Regelung der Drehzahl und/oder des Drehmoments des Motors. Als Sollwert für die Regelung werden dem Regler vorteilhaft Drehzahlwerte aus der Kennlinie bereitgestellt.

Die Regeleinrichtung ist vorzugsweise als Spannungsregelung für eine Zwischenkreisspannung in einem Frequenzumrichter ausgebildet. Vorzugsweise wird hierbei auf eine bereits vorhandene Regeleinrichtung zurückgegriffen und diese entsprechend modifiziert.

Durch eine Regelung der Drehzahl erfolgt vorzugsweise eine besonders genaue Verzögerung der Drehzahl der Gurtantriebsrolle. Durch die genaue Regelung der Drehzahl über die Stopp-Zeit wird der Gurt vorteilhaft geschont. Vorzugsweise ist die Regeleinrichtung in einem Frequenzumrichter, der zur Stromversorgung des Motors ausgebildet ist, integriert.

In einer weiteren vorteilhaften Ausgestaltung der Erfindung weist die Gurtfördereinrichtung eine Stromversorgung für den Motor auf, wobei die Stromversorgung als Frequenzumrichter ausgebildet ist und der Energiespeicher als Zwischenkreis-Energiespeicher ausgebildet ist.

Der Energiespeicher ist vorzugsweise als wiederaufladbare Batterie, als Kondensatoren-Einheit oder als sonstiger elektrischer Energiespeicher ausgebildet. Alternativ oder zusätzlich kann der Energiespeicher auch als Schwungrad-Energiespeicher ausgebildet sein. Ein Elektromotor, der mit dem Schwungrad gekoppelt ist, wirkt als Antrieb für das Schwungrad und/oder als Generator, um die kinetische Energie aus dem rotierenden Schwungrad an dem Zwischenkreis zurück zu übertragen.

Durch die Integration des Energiespeichers in den Zwischenkreis kann vorteilhaft ein bereits bestehender Frequenzumrichter einfach erweitert werden.

Der Einsatz eines Schwungrad-basierten Energiespeichers ist günstig in der Anschaffung und im laufenden Betrieb. Insbesondere können handelsübliche Schwungrad-basierte Energiespeicher sehr viel elektrische Energie speichern und sind daher für den Einsatz im Bergbau oder bei Anwendungen im Rahmen der Schwerindustrie besonders gut geeignet.

In einer weiteren vorteilhaften Ausgestaltung der Erfindung weist die Gurtfördereinrichtung eine Freilaufkupplung auf, wobei die Freilaufkupplung zwischen dem Motor und der Gurtantriebsrolle positioniert ist, wobei die Freilaufkupplung dazu ausgebildet ist, bei einer höheren Drehzahl der Gurtantriebsrolle als die Drehzahl des Motors die Verbindung zum Motor auszukuppeln.

Unter "auskuppeln" wird die Trennung der Welle des Motors mit der Gurtantriebsrolle verstanden.

Eine Freilaufkupplung ist vorzugsweise in der Verbindung, z.B. einer Welle, zwischen dem Motor und der Gurtantriebsrolle angeordnet. Bei einer höheren Drehzahl der Gurtantriebsrolle als der Drehzahl des Motors kuppelt die Freilaufkupplung die Gurtantriebsrolle von dem Motor ab/aus. Weist der Motor wiederum eine höhere Drehzahl als die Gurtantriebsrolle auf, so kuppelt die Freilaufkupplung die Gurtantriebsrolle mit dem Motor zusammen und erzeugt so wieder eine drehfeste Verbindung.

Durch die Freilaufkupplung kann das Trägheitsmoment des Antriebs auf das Trägheitsmoment der Gurtantriebsrolle reduziert werden. Durch das sehr geringe Trägheitsmoment ist einer Belastung des Gurtes vorteilhaft vermindert, da der Motor nicht mehr durch sein Trägheitsmoment der Bewegung des Gurtes entgegenwirkt. Somit wirkt bei einem Anhalten des Motors eine nur geringe Gegenkraft. Durch die geringe Gegenkraft werden Abweichungen in der Gurtspannung erheblich reduziert und der Gurt somit geschont.

Bei dem Verfahren zum Anhalten einer Gurtantriebsrolle einer Gurtfördereinrichtung wird, bei Vorliegen eines unvorhergesehenen Ereignisses, insbesondere eines Stromausfalls, innerhalb einer Stopp-Zeit die Drehzahl des Motors zum Stillstand hin verzögert.

Die Gurtfördereinrichtung für das Verfahren weist in der Regel einen Motor, der mit der Gurtantriebsrolle verbunden ist, auf.

Bei dem Verfahren wird der Motor, während der Verzögerung zum Stillstand, von einem Energiespeicher mit elektrischer Energie versorgt. Die Drehzahl des Motors ist vorzugsweise mit Hilfe einer Regeleinrichtung geregelt.

Die Regeleinrichtung verzögert den Motor anhand von vorgegebenen oder vorgebbaren Soll-Werten für die Drehzahl.

Die Regeleinrichtung dient zur Regelung der Zufuhr von elektrischer Energie aus einem Energiespeicher an den Motor. Anhand der zugeführten elektrischen Energie kann der Motor die Gurtantriebsrolle noch für die Dauer der Stopp-Zeit weiter antreiben.

Durch das verzögerte Anhalten der Gurtantriebsrolle kann ein schnelles Anhalten des Antriebs aufgrund eines geringen Trägheitsmoments und somit einer Belastung des Gurtes, wirksam vermieden werden.

In einer weiteren vorteilhaften Ausgestaltung der Erfindung ist dem Motor eine Stromversorgung, insbesondere ein Frequenzumrichter mit einem Zwischenkreis, zugeordnet, wobei der Energiespeicher dem Zwischenkreis zugeordnet ist, wobei die Verzögerung der Drehzahl des Motors mit Hilfe einer Regeleinrichtung für eine Spannung im Zwischenkreis erfolgt.

Vorzugsweise lässt sich die Drehzahl eines Antriebs sehr einfach durch die Spannung im Zwischenkreis steuern oder regeln. Der Zwischenkreis ist vorzugsweise der Zwischenkreis desjenigen Frequenzumrichters, der den Motor der Gurtfördereinrichtung mit elektrischer Energie versorgt.

Der Energiespeicher ist vorzugsweise dem Zwischenkreis zugeordnet. Vorzugsweise erfolgt eine Absenkung der Drehzahl des Motors durch eine Absenkung der Spannung im Zwischenkreis. Zur Aufrechterhaltung der Spannung im Zwischenkreis ist dem Zwischenkreis vorzugsweise der Energiespeicher zugeordnet.

Durch die Regelung der Drehzahl des Motors durch die Regelung der Spannung des Zwischenkreises ist eine besonders einfache Regelung der Drehzahl des Motors möglich. Durch die einfache Regelung der Drehzahl ist eine besonders genaue Einstellung der Stopp-Zeit möglich.

Bei einer weiteren vorteilhaften Ausgestaltung der Erfindung erfolgt die Verzögerung des Motors anhand einer Kennlinie.

Unter der Verzögerung des Motors wird eine Reduktion der Drehzahl des Motors verstanden.

Eine Kennlinie stellt vorzugsweise den zeitlichen Verlauf der Soll-Drehzahl des Motors bis zur Stopp-Zeit bereit. Die Kennlinie stellt vorzugsweise Soll-Werte für die Regeleinrichtung bereit. Die Kennlinie wird vorzugsweise der Regeleinrichtung bereitgestellt. Zur Bereitstellung von Ist-Werten der Drehzahl für die Regeleinrichtung dient vorzugsweise ein Geber oder eine Bestimmung der Ist-Drehzahl durch eine Messung der Motor-Spannung und/oder des Motorstroms mit Hilfe des Frequenzumrichters.

Bei einer Regelung der Drehzahl des Motors durch die Regelung der bereitgestellten Energie oder der Regelung der Spannung in dem Zwischenkreis, kann die Kennlinie auch als zeitlicher Verlauf der dem Motor zugeführten, elektrischen Energie oder dem zeitlichen Verlauf der Spannung im Zwischenkreis entsprechen.

Im Folgenden wird die Erfindung anhand von Figuren näher beschrieben und erläutert. Die in den Figuren gezeigten Ausführungen sind lediglich beispielhaft und schränken die Erfindung keinesfalls ein.

Es zeigen:
- FIG 1: eine beispielhafte Gurtfördereinrichtung,
- FIG 2: eine beispielhafte Kennlinie sowie
- FIG 3: eine weitere beispielhafte Gurtfördereinrichtung mit einer Freilaufkupplung.

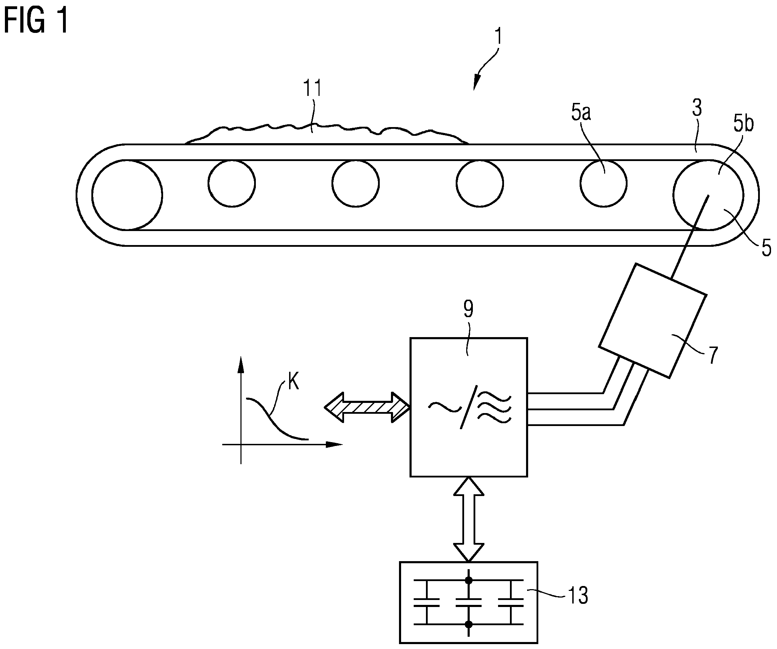

FIG 1 zeigt eine beispielhafte Gurtfördereinrichtung 1. Die Gurtfördereinrichtung umfasst einen Gurt 3 zum Transport von Schüttgut 11. Der Gurt 3 wird auf beiden Seiten von jeweils einer Gurtantriebsrolle 5 gehalten. Durch die Gurtantriebsrollen 5 wird der Gurt 3 auf eine festlegbare Gurtzugspannung gespannt. Die Gurtantriebstrollen 5 sind an der jeweiligen Seite positioniert. Der Gurt 3 wird weiter von Gurtantriebsrollen unterstützt, die als Tragrollen 5a ausgebildet sind. Die an der jeweiligen Seite angeordnete Gurtantriebsrolle 5 wird auch als Gurttrommel 5a bezeichnet. Die zwischen den sogenannten Gurttrommeln 5a positionierten Gurtantriebsrollen 5 werden auch als Tragrollen 5b bezeichnet.

Zumindest eine der Gurtantriebsrollen 5 ist mit einem Motor 7 gekoppelt. Der Motor 7 dient zum Antrieb der jeweiligen Gurtantriebsrolle 5 und damit zum Antrieb des Gurtes 3 der Gurtfördereinrichtung 1. Der Motor 7 ist mit einer Stromversorgung 9 verbunden. Die Stromversorgung 9 ist vorzugsweise als Frequenzumrichter ausgebildet.

Die Stromversorgung ist mit einem Energiespeicher 13 verbunden. Der Energiespeicher 13 ist/wird während des Betriebes des Gurtförderers 1 mit elektrischer Energie geladen. Die Kapazität des Energiespeichers 13 ist vorzugsweise so groß gewählt, dass der Motor 7 den Gurt 3 noch während einer Stopp-Zeit t_S kontrolliert, insbesondere gemäß einer Kennlinie K, zum Stillstand bringen kann. Vorteilhaft ist die Kapazität des Energiespeichers 13 so gewählt, dass ein Weiterbetrieb des Motors 7 für eine Stoppzeit t_S mit einer reduzierten Drehzahl möglich ist.

Der Energiespeicher 13 ist vorzugsweise als Zwischenkreiskondensator, als (freilaufender) Motor mit einem eigenen Frequenzumrichter oder als Akku ausgebildet.

Bei einem Ereignis E, beispielsweise einem Stromausfall, wird der Motor von der elektrischen Energie aus dem Energiespeicher 13 versorgt. Wenn Energie aus dem Energiespeicher entnommen wird, wird der Motor entlang einer Kennlinie K langsam abgebremst, d.h. in den Stillstand überführt.

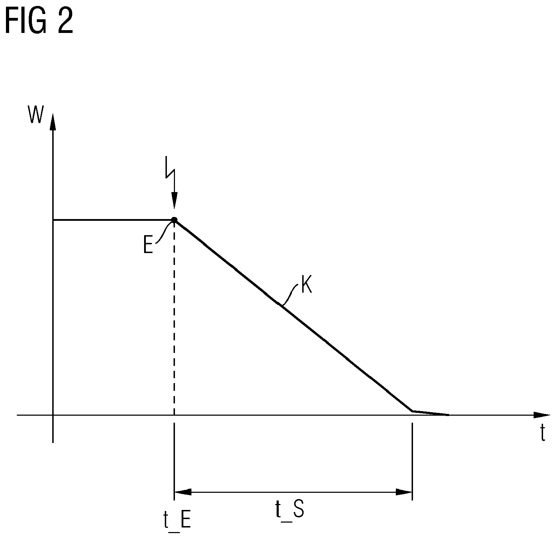

FIG 2 zeigt eine beispielhafte Kennlinie K. Die Kennlinie K gibt Soll-Werte einer Drehzahl w des Motors 7 als Funktion der Zeit t vor. Anhand der Kennlinie K werden Soll-Werte der Drehzahl w des Motors 7 für eine Drehzahl-Regeleinrichtung bereitgestellt. Die Regeleinrichtung stellt Soll-Drehzahlen in Abhängigkeit der Zeit t der Stromversorgung 9 des Motors 7 bereit. Vorzugsweise wird der Motor innerhalb der Stopp-Zeit t_S zum Stillstand hin verzögert.

Gemäß der Kennlinie K erfolgt nach einem Ereignis E, beispielhaft einem Spannungsabfall oder einem Stromausfall, ein langsames Abbremsen des Motors 7. Die benötigte elektrische Energie, die für das langsame Abbremsen des Motors 7 benötigt wird, wird dem Energiespeicher 13 entnommen. Durch die Energie des Energiespeichers 13 kann der Motor 7 innerhalb einer Stopp-Zeit t_S zum Stillstand hin abgebremst werden. Die Stopp-Zeit t_S wird vorzugsweise experimentell für die jeweilige Gurtfördereinrichtung 1 ermittelt. Alternativ oder zusätzlich wird die Stopp-Zeit mit Hilfe einer Simulation der Gurtfördereinrichtung 1 bestimmt. Für eine handelsübliche Gurtfördereinrichtung 1 wurde eine vorteilhafte Stopp-Zeit t_S von 30 ± 20 Sekunden ermittelt.

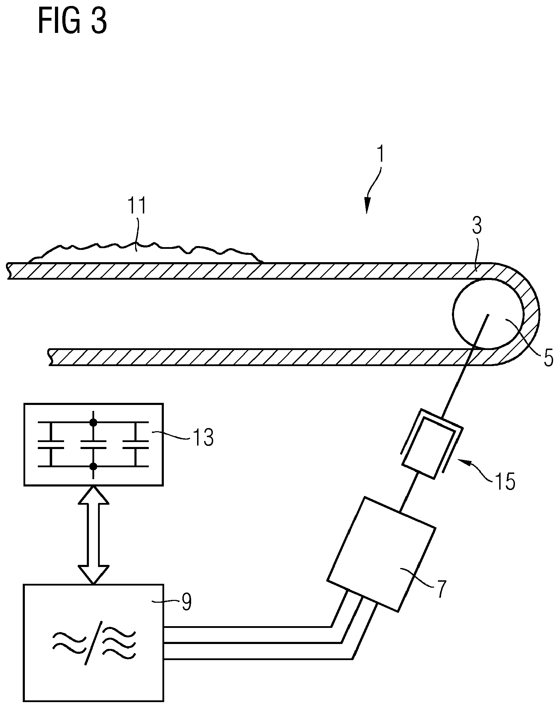

FIG 3 zeigt eine weitere beispielhafte Gurtfördereinrichtung 1 mit einer Freilaufkupplung 15. Die weitere beispielhafte Gurtfördereinrichtung entspricht im Wesentlichen der beispielhaften Gurtfördereinrichtung gemäß der FIG 1. Die Freilaufkupplung 15 trennt die drehfeste Verbindung vom Motor 7 zur Antriebsrolle 5, insofern der Motor 7 eine geringere Drehzahl w als die Antriebsrolle 5 hat.

Zusammenfassend betrifft die Erfindung eine Gurtfördereinrichtung 1 sowie ein Verfahren zum kontrollierten Anhalten einer Gurtfördereinrichtung 1. Insbesondere für direkt angetriebene Gurtfördereinrichtungen 1 kann ein Ereignis E, wie ein Stromausfall, zu einem schnellen Stillstand einer Gurtantriebsrolle 5 führen. Ein schneller Stillstand der Gurtantriebsrolle 5 führt lokal zu einer Abnahme der Gurtspannung des Gurtes 3. Durch die lokale Abnahme der Gurtspannung kann eine Stauchung des Gurtes 3 oder gar ein Falten des Gurtes den Gurt 3 beschädigen. Um eine Beschädigung des Gurtes zu verhindern, schlägt die Erfindung vor, bei dem Ereignis E den Motor 7 langsam zum Stillstand abzubremsen. Die Energie für das langsame Abbremsen wird vorzugsweise einem Energiespeicher 13 entnommen, wobei der Energiespeicher 13 einer Stromversorgung 9 für den Motor 7 zugeordnet ist. Vorzugsweise erfolgt das Abbremsen gemäß einer Kennlinie K, wobei die Kennlinie die Drehzahl w des Motors 7 als Funktion der Zeit t angibt.

## Patentansprüche

1. Gurtfördereinrichtung (1), insbesondere direkt angetriebene Gurtfördereinrichtung (1), aufweisend zumindest eine Gurtantriebtrommel (5) und einen Antrieb, wobei der Antrieb einen Motor (7) umfasst, wobei dem Motor (7) ein Energiespeicher (13) zugeordnet ist, wobei der Motor (7) zum Antrieb der Gurtantriebsrolle (5) vorgesehen ist, wobei die Gurtfördereinrichtung (1) dazu ausgebildet ist, nach einem Ereignis (E), beispielhaft einem Stromausfall, elektrische Energie (E-el) aus dem Energiespeicher (13) bereitzustellen, um die Drehzahl (w) des Motors (7) innerhalb einer Stopp-Zeit (t_S) zum Stillstand hin zu verzögern.

2. Gurtfördereinrichtung (1) nach Anspruch 1, wobei das Verzögern des Motors (7) anhand einer Kennlinie (K) erfolgt, wobei die Kennlinie (K) den Verlauf eines Soll-Wertes der Drehzahl (w) des Motors (7) als Funktion der Zeit (t) vorgibt.

3. Gurtfördereinrichtung (1) nach einem der vorangehenden Ansprüche, wobei die Kennlinie (K) eine lineare Abnahme der Drehzahl (w) vorgibt.

4. Gurtfördereinrichtung (1) nach einem der vorangehenden Ansprüche, wobei die Stopp-Zeit (t_S) zwischen 5 und 150 Sekunden, insbesondere zwischen 30 und 90 Sekunden, dauert.

5. Gurtfördereinrichtung (1) nach einem der vorangehenden Ansprüche, weiter aufweisend eine Regeleinrichtung für die Drehzahl (w) des Motors (7), wobei die Regelung anhand von Sollwerten die Drehzahl des Motors (7) regelt.

6. Gurtfördereinrichtung (1) nach einem der vorangehenden Ansprüche, weiter aufweisend eine Stromversorgung für den Motor (7), wobei die Stromversorgung als Frequenzumrichter ausgebildet ist und der Energiespeicher (13) als Zwischenkreis-Energiespeicher, ausgebildet ist.

7. Gurtfördereinrichtung (1) nach einem der vorangehenden Ansprüche, weiter aufweisend eine Freilaufkupplung (15), wobei die Freilaufkupplung (15) zwischen dem Motor (7) und der Gurtantriebsrolle (5) positioniert ist, wobei die Freilaufkupplung dazu ausgebildet ist, bei einer höheren Drehzahl der Gurtantriebsrolle (5) als die Drehzahl des Motors (7), die Verbindung zum Motor (7) auszukuppeln.

8. Verfahren zum Anhalten einer Gurtantriebsrolle (5) einer Gurtfördereinrichtung (1), wobei ein Motor (7), der mit der Gurtantriebsrolle (5) verbunden ist, bei Vorliegen eines Ereignisses (E), insbesondere eines Stromausfalls, innerhalb einer Stopp-Zeit (t_S) die Drehzahl (w) des Motors (7) zum Stillstand hin verzögert wird.

9. Verfahren nach Anspruch 8, wobei dem Motor eine Stromversorgung (9), insbesondere ein Frequenzumrichter mit einem Zwischenkreis, zugeordnet ist, wobei der Energiespeicher dem Zwischenkreis zugeordnet ist, wobei die Verzögerung der Drehzahl (w) des Motors (7) mit Hilfe einer Regeleinrichtung für eine Spannung im Zwischenkreis erfolgt.

10. Verfahren nach einem der Ansprüche 8 oder 9, wobei die Verzögerung des Motors (7) anhand einer Kennlinie (K) erfolgt.
